# EUROPÄISCHE PATENTSCHRIFT

(11) **EP 2 880 673 B1**
(45) Veröffentlichungstag und Bekanntmachung des Hinweises auf die Patenterteilung: **23.08.2017**
(21) Anmeldenummer: 13742012.1
(22) Anmeldetag: 26.07.2013
(51) Int. Cl.: H01H 71/04, G05B 19/042, G08C 17/02, H02B 1/56

(54) **SCHALTVORRICHTUNG MIT FUNKMODUL UND DEAKTIVIERUNGSFUNKTION**
SWITCHING DEVICE COMPRISING A RADIO MODULE AND DEACTIVATING FINCTION
DISPOSITIF DE COMMUTATION COMPORTANT UN MODULE RADIO ET FONCTION DE DÉSACTIVATION

(30) Priorität: 30.07.2012 DE 102012106923
(43) Veröffentlichungstag der Anmeldung: 10.06.2015
(73) Patentinhaber: Eaton Electrical IP GmbH & Co. KG, 12529 Schönefeld (DE)
(72) Erfinder: REIDT, Georg, 53913 Swisstal (DE)
(74) Vertreter: Eaton IP Group EMEA
(86) Internationale Anmeldenummer: PCT/EP2013/065844
(87) Internationale Veröffentlichungsnummer: WO 2014/019963

(56) Entgegenhaltungen:
- WO-A1-2007/087657
- DE-A1-102007 010 482
- US-A1- 2006 119 344
- US-A1- 2006 176 630
- US-A1- 2008 018 426

## Beschreibung

Die Erfindung betrifft eine Schaltvorrichtung mit einem Schaltgerät und einem Funkmodul. Das Funkmodul ist dazu vorgesehen, eine Information über einen Betriebszustand des Schaltgerätes drahtlos abrufbar zur Verfügung zu stellen und weist hierzu eine Funkschnittstelle zur Kommunikation mit einem Empfangsgerät und einem Sender auf.

Üblicherweise wird das Funkmodul zur Überwachung bzw. Steuerung des Schaltgerätes verwendet. Eine Person, die mit einem geeigneten Empfangsgerät ausgestattet ist, kann die zur Verfügung stehende Information abrufen, ohne mit der Steuervorrichtung in direkten Kontakt treten zu müssen. Auf einen aufwendigen Aufbau eines kabelgebundenen Bussystems kann verzichtet werden. Zudem kann in einem Notfall mittels des Funkmoduls eine entsprechende Benachrichtigung an das Empfangsgerät automatisch übermittelt und so die zuständige Person unabhängig von ihrem Aufenthaltsort erreicht werden.

In der DE 10 2004 002 330 A1 ist eine Schaltvorrichtung dieser Art beschrieben. Das Schaltgerät der Schaltvorrichtung ist in einem Schaltschrank angeordnet. Mit dem Schaltgerät ist eine Funkschnittstelle verbunden, die dazu vorgesehen ist, mit einer entsprechenden Funkschnittstelle des Empfangsgerätes Informationen über den Betriebszustand des Schaltgerätes auszutauschen.

Die in der DE 10 2004 002 330 A1 offenbarte Schaltvorrichtung ist insbesondere dauerhaft kommunikationsfähig. Dies ist jedoch mit Nachteilen verbunden. Das dauerhaft kommunikationsfähige Funkmodul kann durch unerlaubte Zugriffe manipuliert werden. Beispielsweise könnten damit im Funkmodul gespeicherte Daten unrechtmäßig ausgelesen werden. Zudem könnte die Kommunikation zwischen dem Funkmodul und dem Empfangsgerät mitverfolgt werden. Durch den Zugriff auf die Datenübermittlung bzw. auf das Funkmodul könnten kritische Fehlfunktionen der Schaltvorrichtung herbeigeführt werden. Die Sicherheit der Schaltvorrichtung und unter Umständen einer gesamten mit der Schaltvorrichtung verbundener Anlage ist damit beeinträchtigt.

Gleiches gilt für die aus den folgenden Druckschriften bekannten Schaltvorrichtungen.

Die DE 10 2007 010 482 A1 beschreibt eine Schaltschranküberwachungseinrichtung mit mindestens einer in einer Schaltschrankanordnung angeordneten Basisstation und mindestens einem mit dieser in drahtlose Datenübertragungsverbindung zu bringenden Sensor einer Sensoranordnung zum Überwachen von eine Schaltschrankfunktion betreffenden Größen, wobei zur Bestimmung einer optimalen Position für den Sensor ein Messgerät vorgesehen ist, welches anstelle des Sensors eingesetzt werden kann und mittels dessen die Verbindungsqualität messbar ist.

In der US 2006/0119344 A1 ist ein drahtloses System zur Anzeige von Informationen von einem elektrischen Schaltgerät offenbart, wobei mehrere Sensoren zur Erfassung von Zuständen des elektrischen Schaltgerätes vorgesehen sind, welche die erfassten Daten drahtlos an eine Empfangs- und Anzeigeeinheit übermitteln.

Die US 2006/0176630 A1 offenbart ein Monitoring-System, welches Daten von einem elektrischen Schaltgerät empfängt und diese drahtlos an eine Empfangseinheit übermittelt.

Aus der WO 2007/087657 A1 ist eine Anzeige-/Steuereinheit mit einer Datenverarbeitungseinheit zur Auswertung von Zustandssignalen bekannt, wobei eine Schnittstelle zum Empfang der Zustandssignale als aktive Funkschnittstelle ausgebildet ist.

Die Aufgabe der vorliegenden Erfindung besteht darin, die IT-Sicherheit der Schaltvorrichtung der genannten Art zu verbessern.

Die Aufgabe ist durch die Merkmale des Patentanspruchs 1 gelöst. Die Patentansprüche 2 bis 8 stellen dabei weitere geeignete Ausführungsformen der Erfindung dar.

Dementsprechend zeichnet sich die erfindungsgemäße Schaltvorrichtung unter anderem dadurch aus, dass die Schaltvorrichtung ein manuelles Betätigungselement umfasst, mittels dessen das Funkmodul ein- und ausschaltbar ist. Das Funkmodul stellt also gemäß der Erfindung nur solange eine Betriebsinformation des Schaltgerätes drahtlos zur Verfügung, bis das Funkmodul außer Betrieb gesetzt worden (deaktiviert) ist. Mit der Deaktivierung soll ein Ausschalten des Funkmoduls, beispielsweise durch eine mechanische oder galvanische Unterbrechung einer geeigneten Stromleitung, gemeint sein. Auch ist eine programmiertechnische Umstellung des Funkmoduls denkbar, zum Bespiel durch das Setzen eines dazu vorgesehenen Bits/Kontrollpins, wodurch ein zur Deaktivierung des Funkmoduls geeigneter interner Schalter des Funkmoduls betätigt wird. Ist das Funkmodul derart ausgeschaltet, gibt es keine Möglichkeiten über das Funkmodul Informationen über das Schaltgerät zu erhalten.

Darüber hinaus zeichnet sich die erfindungsgemäße Schaltvorrichtung dadurch aus, dass mittels des Funkmoduls ein Steuersignal an das Schaltgerät übermittelbar ist. Das Funkmodul ist somit dazu geeignet ausgebildet, ein von einem Sender übermitteltes Steuersignal zu empfangen und/oder zu verarbeiten und/oder an das Schaltgerät weiter zu leiten. Damit kann die Schaltvorrichtung nicht nur drahtlos überwacht, sondern auch drahtlos gesteuert werden.

Schließlich zeichnet sich die erfindungsgemäße Schaltvorrichtung auch dadurch aus, dass das Funkmodul über eine von einer Energieversorgung des Schaltgeräts unabhängige Energieversorgung verfügt, und das Schaltgerät mittels der unabhängigen Energieversorgung mit Energie versorgbar ist.

Erfindungsgemäß ist das Funkmodul durch eine manuelle Betätigung des Betätigungselements deaktivierbar. Durch die zur manuellen Betätigung geeignete Ausgestaltung des Betätigungselements, zum Beispiel in Form eines Druckknopfes, eines Drehknopfes, eines Schalthebels oder
dergleichen, ist sichergestellt, dass die Deaktivierung nicht durch unerlaubten softwaretechnischen Zugriff von außen vorgenommen werden kann. Der Anwender kann also selbst bestimmen, ob die Schaltvorrichtung mittels drahtloser Kommunikation erreichbar ist oder nicht.

Ebenso kann das deaktivierte Funkmodul mittels des Betätigungselements wieder in einen aktiven Betriebszustand versetzt werden, in dem Datenübertragung der Betriebsinformation des Schaltgerätes stattfinden kann.

Ein zusätzlicher Vorteil einer Deaktivierbarkeit des Funkmoduls liegt darin, dass der Energieverbrauch der Schaltvorrichtung durch die Deaktivierung des Funkmoduls gesenkt werden kann.

Gemäß einer Ausführungsform der Erfindung ist das Funkmodul als eine externe Einheit ausgebildet. In dieser Ausführung kann das Funkmodul separat vom Schaltgerät angeordnet sein, zum

Beispiel an einem für die drahtlose Kommunikation geeigneten Ort. Das Funkmodul ist als mit dem Schaltgerät verbindbar ausgebildet, um den Austausch von Daten zwischen dem Funkmodul und dem Schaltgerät zu ermöglichen. Die Verbindung kann drahtgebunden oder nicht drahtgebunden sein. Sie kann beispielsweise in Form eines Ethernet-Kabels oder einer anderen geeigneten Verbindungsart realisiert sein.

Zur Kommunikation zwischen dem Funkmodul und dem Empfangsgerät/Sender kann Bluetooth oder ein entsprechend geeigneter weiterer Funkstandard verwendet werden. Das Funkmodul umfasst hierzu eine WLAN-Schnittstelle oder eine vergleichbare Schnittstelle. Das Empfangs-/Sendegerät kann beispielsweise durch einen Smartphone, einen Tablet-PC, Pager oder ein ähnliches Gerät mit der entsprechenden Programmierung realisiert sein.

Es kann von Vorteil sein, wenn die Information über den Betriebszustand des Schaltgerätes auch dann noch vom Funkmodul zur Verfügung gestellt werden kann, wenn das Schaltgerät ausgelöst wird bzw. einer Störung unterliegt. Im Fall der Auslösung, beispielsweise Überlast-Auslösung, und/oder der Störung ist eine Energieversorgung des Schaltgerätes unter Umständen unterbrochen. Daher ist das Funkmodul mit einer Energieversorgung ausgestattet, die von der Energieversorgung des Schaltgerätes unabhängig ist. Diese kann beispielsweise über einen eigenen GND/+24VDC-Anschluss am Funkmodul erfolgen. Fällt die Energieversorgung des Schaltgerätes aus, so kann das Funkmodul über die eigene Energieversorgung mit Energie, beispielsweise Strom, weiter versorgt werden. Ferner kann das Funkmodul in diesem Fall über die eigene zugeführte Energieversorgung das Schaltgerät weiter mit Energie versorgen und somit weiterhin Daten aus dem ausgeschalteten Schaltgerät abrufen.

Gemäß einer weiteren Ausführungsform der Erfindung umfasst das Funkmodul ein Anzeigeelement. Das Anzeigeelement kann dazu vorgesehen sein, die Information über den Betriebszustand des Schaltgerätes visuell darzustellen. Das Anzeigeelement kann eine Multicolor-LED umfassen, die dazu geeignet ist, Licht unterschiedlicher Farben auszustrahlen. Die Farbdarstellung des Anzeigeelements kann in Abhängigkeit eines Betriebsparameters des Schaltgerätes erfolgen.

Zum Beispiel kann eine grüne Lichtfarbe einen regelmäßigen Zustand des Schaltgerätes indizieren, während eine rote Lichtfarbe einen ausgelösten Zustand des Schaltgerätes oder eine Störung signalisieren kann. Ferner kann die Darstellung durch statisches und/oder zeitlich veränderliches Leuchten erfolgen. So kann zum Beispiel ein Blinken des Anzeigeelements einen vorbestimmten Betriebszustand des Schaltgerätes anzeigen. Durch die Verwendung eines breiten Spektrums der durch das Anzeigeelement darstellbaren Farben (beispielsweise von grün über blau, gelb, orange bis rot) kann dabei eine für das menschliche Auge intuitive Anzeige des Betriebszustandes erreicht werden, insbesondere falls sie zusätzlich mit sich zeitlich ändernder Helligkeit der Anzeige kombiniert wird.

Zusätzlich zu dem Anzeigelement kann das Funkmodul einen Referenzring umfassen. Der Referenzring dient dazu, die Abhängigkeit der Farbdarstellung des Anzeigeelements von dem Betriebsparameter des Schaltgerätes zu visualisieren. Diese Darstellung soll eine Interpretation des vom Anzeigeelement ausgesandten Signals erleichtern. Der Referenzring kann in Form einer tabellarischen Zuordnung von Farben zu Betriebszuständen realisiert sein. Der Referenzring kann als eine runde oder je nach Anwendung anders geformte, beispielsweise oval oder quadratisch ausgebildete, gelochte Scheibe realisiert sein, wobei die Scheibe die erforderliche Information über die Farbdarstellung und die Zuordnung der Betriebsparameter in Schrift und/oder Bildform enthält. Der Referenzring kann darüber hinaus derart in unmittelbarer Nähe des Anzeigeelements, zum Beispiel darüber, darunter oder dahinter, angeordnet sein, dass das vom Anzeigeelement dargestellte Lichtsignal zusammen mit der durch den Referenzring dargestellten Zuordnungsinformation wahrgenommen werden kann.

Zur Verbesserung der drahtlosen Kommunikation zwischen dem Funkmodul und dem Empfangsgerät/Sender kann es von Vorteil sein, das Funkmodul mit einer Antenne zu versehen, die hinter dem Referenzring angeordnet ist. Dadurch ist die drahtlose Abrufbarkeit der Betriebsinformation nicht auf den ersten Blick bereits für das menschliche Auge erkennbar. Gemäß eines Ausführungsbeispiels ist die Antenne in Form einer Klebefolie realisiert. Die Antenne kann direkt mit dem Referenzring verbunden sein. Auf diese Weise kann der beispielsweise aus Kunststoff gefertigte Referenzring zusammen mit der darauf bereits aufgeklebten Antenne vom Anwender installiert werden. Dadurch kann der Anwender einen Arbeitsschritt (Anbringung der Antenne) einsparen, und braucht sich darüber hinaus um eine geeignete Anordnung der Antenne nicht zu kümmern.

In manchen Anwendungsbereichen der Schaltvorrichtung kann es vorteilhaft sein, wenn die Schaltvorrichtung einen Schaltschrank mit einem Schaltschrankgehäuse umfasst. Das Schaltgerät ist dann in dem Schaltschrank angeordnet und wird so durch das Schaltschrankgehäuse geschützt. Da die drahtlose Datenübertragung aus dem Schaltschrank durch das Schaltschrankgehäuse erschwert sein kann, ist das Funkmodul am Schaltschrankgehäuse angeordnet. Das Betätigungselement ist geeigneter Weise entsprechend derart angeordnet, dass es von außerhalb des Schaltschranks betätigbar ist. Auf diese Weise kann die manuelle Betätigung des Betätigungselements ohne einen Zugriff auf sich im Schaltschrank befindenden Geräte erfolgen. Unabhängig von der Anordnung des Betätigungselements kann auch das Anzeigeelement derart angeordnet sein, dass die Darstellung des Betriebszustandes des Schaltgerätes von außerhalb des Schaltschranks sichtbar ist. Gemäß eines weiteren Ausführungsbeispiels kann die Antenne im Funkmodul integriert sein, zum Beispiel auf einer Leiterplatte des Funkmoduls, wobei das Funkmudul derart konfiguriert ist, dass die Signalausstrahlung der Funksignale des Funkmoduls durch eine Öffnung in dem Schaltschrankgehäuse hindurch erfolgen kann.

Gemäß einer Ausführungsform der Erfindung kann das Betätigungselement einen Leuchttaster umfassen. Der Leuchttaster kann zu einer Vereinfachung des Aufbaus der Schaltvorrichtung zusätzlich die Funktion des Anzeigeelements ausüben. Der Leuchttaster kann derart ausgebildet sein, dass aus einer Stellung des Leuchttasters erkennbar ist, wenn das Funkmodul deaktiviert ist. Zum Beispiel kann der Leuchttaster einen Druckknopf umfassen, der manuell eingedrückt oder nicht eingedrückt sein kann. Der Leuchttaster kann derart konfiguriert sein, dass bei eingedrücktem Druckknopf das Funkmodul deaktiviert ist und bei nicht eingedrücktem Druckknopf die drahtlose Datenübertragung mittels des Funkmoduls möglich ist. Auch eine umgekehrte Konfiguration ist denkbar. Auf diese Weise ist es augenscheinlich, ob das Funkmodul deaktiviert ist oder nicht, und zwar unabhängig von der Farbdarstellung des Leuchttasters bzw. des Anzeigeelements. In einer anderen Variante kann der Leuchttaster durch geeignete andere visuelle, zum Beispiel mittels einer LED, oder akustische Anzeigeart signalisieren, ob das Funkmodul deaktiviert ist. Natürlich können der Leuchttaster und das Anzeigelement mit dieser Funktion auch als separate Teile realisiert sein.

Von Vorteil kann es zudem sein, wenn das Betätigungselement mit Mitteln ausgestattet ist, die ein Rücksetzen oder Quittieren eines Betriebszustandes des Schaltgerätes ermöglichen. Diese zusätzliche Funktion erweitert den Einsatzbereich der Schaltvorrichtung und kann eine schnelle Reaktion auf Auslösungen und/oder Störungen im Betrieb der Schaltvorrichtung und aller damit verbundenen Geräte ermöglichen.

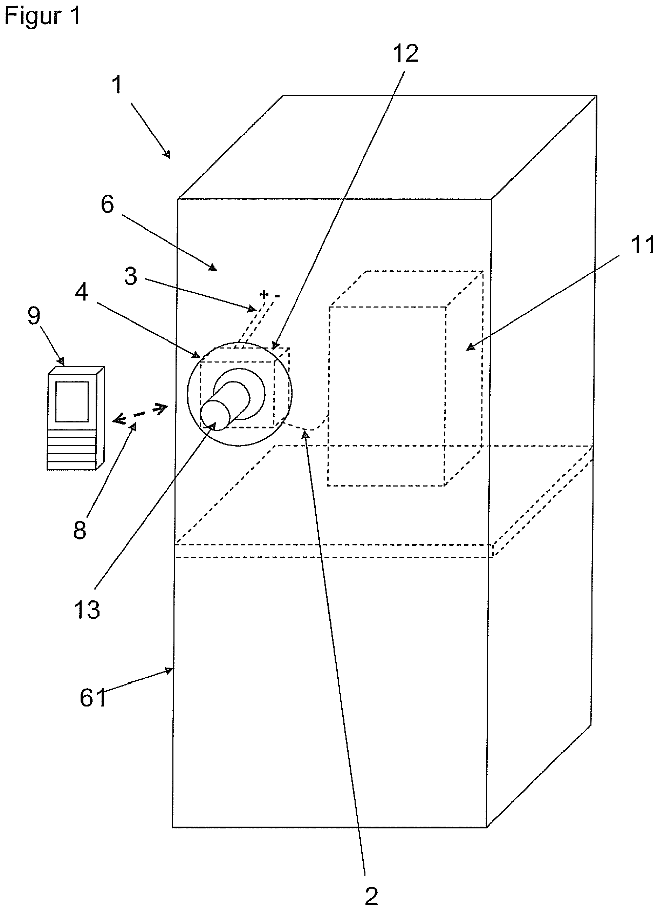

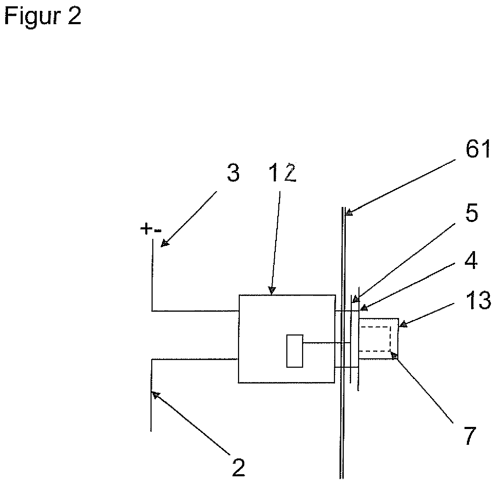

Die Erfindung wird nachfolgend im Zusammenhang mit Figuren 1 und 2 näher erläutert.
Figur 1 zeigt eine schematische Skizze einer Ausführungsform einer erfindungsgemäßen Schaltvorrichtung.
Figur 2 zeigt eine schematische Skizze einer Teilansicht der Schaltvorrichtung aus Figur 1.

Im Einzelnen ist in Figur 1 eine erfindungsgemäße Schaltvorrichtung 1 dargestellt. Die Schaltvorrichtung 1 umfasst einen Schaltschrank 6 mit einem Schaltschrankgehäuse 61. Im Schaltschrank 6 ist ein Schaltgerät 11 angeordnet, so dass das Schaltgerät vom Schaltschrankgehäuse 61 vor äußeren mechanischen bzw. elektromagnetischen Einwirkungen geschützt ist. Das Schaltschrankgehäuse 61 ist derart ausgebildet, dass eine Funkdatenübermittlung aus dem Schaltschrank 6 nach außen unterdrückt ist. Die sich im Schaltschrank 6 befindenden Elemente der Schaltvorrichtung 1 sind in Figur 1 jeweils mit einer unterbrochenen Linie skizziert, um deren räumliche Anordnung zu verdeutlichen.

Ferner umfasst die Schaltvorrichtung 1 ein Funkmodul 12, das am Schaltschrankgehäuse 61 angeordnet und befestigt ist. Das Funkmodul 12 ist dabei als separate Einheit ausgebildet und über eine Kabelverbindung 2 mit dem Schaltgerät 11 verbunden, so dass ein Austausch von Informationen zwischen dem Funkmodul 12 und dem Schaltgerät 11 möglich ist. Das Funkmodul 12 ragt teilweise aus dem Schaltschrank 6 heraus.

Das Funkmodul 12 stellt Informationen über einen Betriebszustand des Schaltgerätes 11, die über die Verbindung 2 übermittelt werden können, zum Abruf zur Verfügung. Ein Empfangsgerät 9 kann mit dem Funkmodul 12 eine drahtlose Verbindung, die in Figur 1 mit einem Doppelpfeil 8 gekennzeichnet ist, eingehen und die Informationen vom Funkmodul abrufen. Darüber hinaus kann das Empfangsgerät 9 als Sender fungieren und unter Nutzung der drahtlosen Verbindung Signale, zum Beispiel Steuersignale, an das Funkmodul 12 senden.

Das Funkmodul 12 ist mit einer Energieversorgung 3 ausgestattet, die unabhängig von der Energieversorgung des Schaltgerätes 11 ist, um die Funktionsfähigkeit des Funkmoduls 12 im ausgelösten Zustand des Schaltgerätes 11 sicherzustellen. Darüber hinaus kann durch die Energieversorgung 3 des Funkmoduls 12 das Schaltgerät 11 im ausgelösten Zustand weiter mit Energie versorgt werden, so dass Informationen über den Betriebszustand des Schaltgerätes 11 auch in diesem Fall noch abgerufen werden können.

Die Schaltvorrichtung 1 umfasst ferner ein Betätigungselement 13, das in diesem Ausführungsbeispiel in das Funkmodul 12 integriert ist. Das Betätigungselement 13 ist in Form eines Druckknopfes ausgebildet. Wird der Druckknopf gedrückt, so rastet er in einer vorgegebenen gedrückten Stellung ein. In dieser Stellung des Druckknopfes ist das Funkmodul 12 in Betrieb. Eine Datenübermittlung zwischen dem Funkmodul 12 und dem Gerät 9 kann durchgeführt werden. Ist der Druckknopf nicht eingedrückt, so ist die Energieversorgung des Funkmoduls 12 unterbrochen und das Funkmodul damit deaktiviert.

Am Funkmodul 12 ist ein Referenzring 4 vorgesehen. Der Referenzring 4 weist die Form einer gelochten Rundscheibe auf, die in unmittelbarer Nähe zum Anzeigeelement angeordnet ist.

Figur 2 zeigt eine detaillierte Teilansicht der Schaltvorrichtung aus Figur 1. Gleiche oder gleichartige Teile wurden dabei in den Figuren 1 und 2 jeweils mit gleichen Bezugszeichen versehen.

In Figur 2 ist das Funkmodul 12 in einer Queransicht dargestellt, wobei das Funkmodul 12 am Schaltschrankgehäuse 61 angeordnet ist, so dass es auf dem Schaltschrank teilweise herausragt. Das Funkmodul 12 weist einen Zugang zur eigenen Energieversorgung 3 sowie eine Kabelverbindung 2 zum in Figur 2 nicht dargestellten Schaltgerät 11 auf.

Des Weiteren ist am Funkmodul 12 ein Anzeigeelement 7 vorgesehen. Das Anzeigeelement 7 (in Figur 1 nicht sichtbar) umfasst eine RGB-LED, die im Betätigungselement 13 eingebaut ist. Das Betätigungselement 13 ist dabei teilweise aus durchsichtigem Material gebildet, so dass das von der RGB-LED ausgestrahlte Licht von außen sichtbar ist. Zudem ist in unmittelbarer Nähe des Anzeigeelements 7 der Referenzring 4 angeordnet, der dazu vorgesehen ist, die Abhängigkeit der Farbdarstellung des Anzeigeelements 7 von dem Betriebszustand des Schaltgerätes 11 graphisch in Form einer Zuordnungstabelle darzustellen.

Ferner umfasst das Funkmodul 12 eine Antenne 5, die teilweise zwischen dem Referenzring 4 und dem Schaltschrankgehäuse 61 angeordnet ist. Die Antenne ist für einen sich außerhalb des Schaltschranks 6 befindenden Betrachter nicht sichtbar, da sie vorzugsweise vom Referenzring 4 vollständig verdeckt ist.

### Bezugszeichenliste

- 1: Vorrichtung
- 11: Schaltgerät
- 12: Funkmodul
- 13: Betätigungselement
- 2: Verbindung
- 3: Energieversorgung
- 4: Referenzring
- 5: Antenne
- 6: Schaltschrank
- 61: Schaltschrankgehäuse
- 7: Anzeigeelement
- 8: Doppelpfeil
- 9: Empfangsgerät

## Patentansprüche

1. Schaltvorrichtung (1), umfassend ein Schaltgerät (11) und ein Funkmodul (12), wobei das Funkmodul (12) eine Funkschnittstelle zur Kommunikation mit einem Empfangsgerät (9) und einem Sender aufweist und wobei das Funkmodul (12) Informationen über einen Betriebszustand des Schaltgerätes (11) zum drahtlosen Abruf zur Verfügung stellt,
die Schaltvorrichtung (1) ein manuelles Betätigungselement (13) umfasst, mittels dessen das Funkmodul (12) ein- und ausschaltbar ist, **dadurch gekennzeichnet, dass** mittels des Funkmoduls (12) ein Steuersignal an das Schaltgerät (11) übermittelbar ist und dass das Funkmodul (12) über eine von einer Energieversorgung des Schaltgeräts (11) unabhängige Energieversorgung (3) verfügt, und das Schaltgerät (11) mittels der unabhängigen Energieversorgung (3) mit Energie versorgbar ist.

2. Schaltvorrichtung (1) nach Anspruch 1, **dadurch gekennzeichnet, dass** das Funkmodul (12) als externe, mit dem Schaltgerät (11) verbindbare Einheit ausgebildet ist.

3. Schaltvorrichtung (1) nach einem der vorangehenden Ansprüche, **dadurch gekennzeichnet, dass** am Funkmodul (12) ein Anzeigeelement (7) vorgesehen ist, wobei das Anzeigeelement (7) eine Multicolor-LED umfasst, deren Farbdarstellung in Abhängigkeit von einem Betriebsparameter des Schaltgeräts (11) erfolgen kann.

4. Schaltvorrichtung (1) nach Anspruch 3, **dadurch gekennzeichnet, dass** das Funkmodul (12) einen Referenzring (4) aufweist, der die Abhängigkeit der Farbdarstellung des Anzeigeelements (7) vom Betriebsparameter des Schaltgeräts (11) visualisiert.

5. Schaltvorrichtung (1) nach Anspruch 4, **dadurch gekennzeichnet, dass** am Funkmodul (12) eine Antenne (5) vorgesehen ist, die verdeckt hinter dem Referenzring (4) angeordnet ist.

6. Schaltvorrichtung (1) nach einem der vorangehenden Ansprüche, **dadurch gekennzeichnet, dass** die Schaltvorrichtung (1) einen Schaltschrank (6) mit einem Schaltschrankgehäuse (61) umfasst, wobei das Schaltgerät (11) im Schaltschrank (6) angebracht ist, das Funkmodul (12) am Schaltschrankgehäuse (61) angebracht ist, und das Betätigungselement (13) von außerhalb des Schaltschrankgehäuses (61) manuell betätigbar ist.

7. Schaltvorrichtung (1) nach einem der vorangehenden Ansprüche, **dadurch gekennzeichnet, dass** das Betätigungselement (13) einen Leuchttaster umfasst.

8. Schaltvorrichtung (1) nach einem der vorangehenden Ansprüche, **dadurch gekennzeichnet, dass** das Betätigungselement (13) Mittel zum Rücksetzen oder Quittieren eines Betriebszustandes des Schaltgeräts (11) umfasst.

## Claims

1. Switching apparatus (1), comprising a switching device (11) and a radio module (12), wherein the radio module (12) has a radio interface for communication with a receiver (9) and a transmitter, and wherein the radio module (12) provides information about an operating state of the switching device (11) for wireless retrieval, the switching apparatus (1) comprises a manual operating element (13) by means of which the radio module (12) can be switched on or off, **characterized in that** a control signal can be transmitted to the switching device (11) by means of the radio module (12) and the radio module (12) comprises an energy supply (3) independent of an energy supply of the switching device (11) and the switching device (11) can be supplied with energy using the independent energy supply (3).

2. Switching apparatus (1) according to claim 1, **characterized in that** the radio module (12) is configured as an external unit that can be connected to the switching device (11).

3. Switching apparatus (1) according to any of the preceding claims, **characterized in that** a display element (7) is provided on the radio module (12), wherein the display element (7) comprises a multicolour LED, the colour display of which depends on an operating parameter of the switching device (11).

4. Switching apparatus (1) according to claim 3, **characterized in that** the radio module (12) comprises a reference ring (4) that visualizes the dependence of the colour display of the display element (7) on the operating parameter of the switching device (11).

5. Switching apparatus (1) according to claim 4, **characterized in that** an antenna (5) is provided on the radio module (12) which is arranged hidden behind the reference ring (4).

6. Switching apparatus (1) according to any of the preceding claims, **characterized in that** the switching apparatus (1) comprises a control cabinet (6) with a control cabinet housing (61), wherein the switching device (11) is mounted inside the control cabinet (6), the radio module (12) is mounted on the control cabinet housing (61) and the operating element (13) can be manually operated from outside the control cabinet housing (61).

7. Switching apparatus (1) according to any of the preceding claims, **characterized in that** the operating element (13) comprises an illuminated pushbutton.

8. Switching apparatus (1) according to any of the preceding claims, **characterized in that** the operating element (13) comprises means for resetting or acknowledging an operating state of the switching device (11).

## Revendications

1. Dispositif de commutation (1), comprenant un appareil de commutation (11) et un module radio (12), dans lequel le module radio (12) comporte une interface radio en vue de la communication avec un appareil récepteur (9) et avec un émetteur et dans lequel le module radio (12) met à disposition des informations concernant un état de fonctionnement de l'appareil de commutation (11) en vue de l'interrogation sans fil,
le dispositif de commutation (1) comprenant un élément d'actionnement manuel (13) au moyen duquel le module radio (12) peut être mis en service et hors service,
**caractérisé en ce que**, au moyen du module radio (12), un signal de commande peut être transmis à l'appareil de commutation (11) et **en ce que** le module radio (12) dispose d'une alimentation en énergie (3) qui est indépendante d'une alimentation en énergie de l'appareil de commutation (11) et **en ce que** l'appareil de commutation (11) peut être alimenté en énergie au moyen de l'alimentation en énergie (3) indépendante.

2. Dispositif de commutation (1) selon la revendication 1, **caractérisé en ce que** le module radio (12) est conçu comme une unité externe qui peut être reliée à l'appareil de commutation (11).

3. Dispositif de commutation (1) selon l'une des revendications précédentes, **caractérisé en ce qu'**un élément indicateur (7) est prévu au niveau du module radio (12), l'élément indicateur (7) comprenant une LED multicolore dont la présentation colorée peut s'effectuer en fonction d'un paramètre de fonctionnement de l'appareil de commutation (11).

4. Dispositif de commutation (1) selon la revendication 3, **caractérisé en ce que** le module radio (12) comporte une bague de référence (4) qui visualise la manière dont la présentation colorée de l'élément indicateur (7) dépend du paramètre de fonctionnement de l'appareil de commutation (11).

5. Dispositif de commutation (1) selon la revendication 4, **caractérisé en ce qu'**une antenne (5) est prévue au niveau du module radio (12), laquelle antenne est agencée cachée derrière la bague de référence (4).

6. Dispositif de commutation (1) selon l'une des revendications précédentes, **caractérisé en ce que** le dispositif de commutation (1) comprend une armoire électrique (6) avec un coffret d'armoire électrique (61), l'appareil de commutation (11) étant placé dans l'armoire électrique (6), le module radio (12) étant placé au niveau du coffret d'armoire électrique (61) et l'élément d'actionnement (13) pouvant être actionné manuellement de l'extérieur du coffret d'armoire électrique (61).

7. Dispositif de commutation (1) selon l'une des revendications précédentes, **caractérisé en ce que** l'élément d'actionnement (13) comprend un bouton lumineux.

8. Dispositif de commutation (1) selon l'une des revendications précédentes, **caractérisé en ce que** l'élément d'actionnement (13) comprend des moyens pour remettre à zéro ou confirmer un état de fonctionnement de l'appareil de commutation (11).
